# EUROPEAN PATENT SPECIFICATION

(11) **EP 3 557 035 B1**
(45) Date of publication and mention of the grant of the patent: **11.05.2022**
(21) Application number: 19163951.7
(22) Date of filing: 20.03.2019
(51) Int. Cl.: F02K 1/38, F02K 1/40, F02K 1/78, F02K 3/06

(54) **TURBOFAN ENGINE**
MANTELSTROM-TRIEBWERK
MOTEUR À DOUBLE FLUX

(30) Priority: 20.04.2018 GB 201806426
(43) Date of publication of application: 23.10.2019
(73) Proprietor: Rolls-Royce plc, London N1 9FX (GB)
(72) Inventor: Wells, John, Derby, Derbyshire DE24 8BJ (GB); Mosley, Christopher, Derby, Derbyshire DE24 8BJ (GB); Grech, Nicholas, Derby, Derbyshire DE24 8BJ (GB)
(74) Representative: Rolls-Royce plc

(56) References cited:
- US-A- 4 280 587
- US-A1- 2003 146 296
- US-A1- 2015 247 425
- US-A1- 2016 003 194
- US-A1- 2017 166 318

## Description

### BACKGROUND

Examples of turbofan engines are described.

In a turbofan engine, an engine core bounded by a core cowling is positioned radially inwardly of outer fixed structure or nacelle with respect to the longitudinal axis of the engine, defining a bypass duct between the outer surface of the engine core's cowling and the internal surface of the outer fixed structure over an axial portion of the engine where both the core cowling and the outer fixed structure are present. Over this axial portion, the internal surface of the outer fixed structure provides an outer wall of the bypass duct and the core cowling provides the internal wall of the bypass duct. In the case of a separate-jets turbofan engine, the downstream terminal end of the outer fixed structure defines a bypass duct exit plane which is fore (upstream) of the exit plane of the engine core, both the bypass duct exit plane and the engine core exit plane being substantially normal to the longitudinal axis of the engine. In the case of a mixed-jets turbofan engine, the downstream terminal end of the outer fixed structure is located downstream of the engine core exit plane, both the engine core exit plane and the downstream terminal end of the outer fixed structure being substantially normal to the longitudinal axis of the engine.

In operation of a separate-jets turbofan engine, exhaust from the engine core is expelled through the engine core exit plane. Bypass air passes through the bypass duct, and is expelled through the bypass duct exit plane as bypass exhaust flow which provides the majority of the engine's thrust. In the case of a mixed-jets engine, the bypass air and exhaust from the engine core are mixed in the region between the engine core exit plane and the downstream terminal end of the outer fixed structure.

There is an ongoing desire to improve engine exhaust performance to reduce both specific fuel consumption and fuel burn.

Published US patent application US 2003/0146296 A1 discloses an outer structure of a gas turbine engine, the outer structure comprising an adaptable moving lip and having a downstream terminal end which in certain phases of flight has an internal surface of constant radius R over a first azimuthal interval greater than 180° with respect to the engine axis, and wherein the radius of the internal surface is alternately greater than and less than R over second to sixth azimuthal intervals, the first to sixth azimuthal intervals forming a total azimuthal interval of 360°.

US patent 4280 587 discloses a discharge nozzle of a jet engine, the nozzle having lobes for promoting mixing of the jet engine discharge flow with ambient air to reduce jet noise. The radius of the internal surface of the nozzle in its downstream terminal plane, measured with respect to the engine axis, is multi-valued over certain azimuthal intervals defined with respect to the engine axis due to the presence of the lobes.

Published US patent application US 2016/003194 A1 discloses a fan nozzle for a gas turbine engine, the internal radius of the nozzle in the downstream terminal plane thereof having a constant value R over a first azimuthal and a value which varies with azimuthal position but which is always greater than R over second and third azimuthal intervals each of which are contiguous with the first azimuthal interval but not with each other. The nozzle has a discontinuity between the second and third azimuthal intervals allowing accommodation of a supporting pylon.

### BRIEF SUMMARY

According to the present invention, a turbofan engine comprises an engine core positioned radially inwardly of an outer fixed structure with respect to the longitudinal axis of the engine, the aft or downstream end of the outer fixed structure having a terminal plane which is substantially normal to the longitudinal axis of the engine, the radius R of the internal surface of the outer fixed structure in the terminal plane being a function R(φ) of azimuthal position φ in the terminal plane with respect to the longitudinal axis of the engine such that
(i) the radius has a constant value R₀ within a first azimuthal interval of at least 180°;
(ii) the radius has a value greater than R₀ at any azimuthal position within a second azimuthal interval; and
(iii) the radius has a value less than R₀ at any azimuthal position within a third azimuthal interval;
(iv) the radius has a value greater than R₀ at any azimuthal position within a fourth azimuthal interval;
wherein the second azimuthal interval is contiguous with the first and third azimuthal intervals, the fourth azimuthal interval is contiguous with the first and third azimuthal intervals, the first, second, third and fourth azimuthal intervals form a total azimuthal interval of 360°, and characterised in that R(φ) is single-valued at all azimuthal positions φ at which the internal surface of the outer fixed structure exists in the terminal plane. The radius may pass through a maximum value R₂ at a single azimuthal position within each of the second and fourth azimuthal intervals and pass through a minimum value R₁ at a single azimuthal position within the third azimuthal interval, wherein R₂ > R₀ > R₁, the radius being a monotonic function of azimuthal position φ between any pair of azimuthal positions corresponding to (a) a maximum and a minimum value of the radius and (b) a maximum value of the radius and an adjacent boundary which is either the boundary of the first and second azimuthal intervals or the boundary of the first and fourth azimuthal intervals. The radius of the internal surface may have the maximum value R₂ at the midpoints of the second and fourth azimuthal intervals. The minimum value R₁of the radius of the internal surface may occur at the midpoint of the third azimuthal interval. The internal surface may have a discontinuity over an azimuthal interval which includes the azimuthal position corresponding to the minimum value R_{1.} The centre of the discontinuity coincides in azimuth with the azimuthal position corresponding to the minimum value R_{1.}

The internal surface may have a discontinuity over an azimuthal interval including the centre of the first azimuthal interval. The centre of the discontinuity may coincide in azimuth with the centre of the first azimuthal interval.

The engine may be a separate-jets engine, the downstream terminal plane of the outer fixed structure being the bypass duct exit plane of the engine. Alternatively, the engine may be a mixed-jets engine.

The internal and external radii of the outer fixed structure in the downstream terminal plane thereof may be substantially equal for all azimuthal positions where the outer fixed structure exists in the downstream terminal plane. Alternatively, the difference between the external and internal radii of the outer fixed structure in the downstream terminal plane thereof may be finite and constant for all azimuthal positions where the outer fixed structure exists in the downstream terminal plane.

### BRIEF DESCRIPTION OF THE DRAWINGS

Examples are described below with reference to the accompanying drawings in which:
- Figure 1: is a longitudinal section through a known, separate-jets, turbofan engine, the section including the longitudinal axis (rotation axis) of the engine;
- Figure 2: is a side view of a rear portion of the Figure 1 engine;
- Figure 3: is a longitudinal section through a known, mixed-jets, turbofan engine, the section including the longitudinal axis (rotation axis) of the engine;
- Figure 4: is a side view of a rear portion of the Figure 3 engine;
- Figure 5: shows the internal surface of the outer fixed structure of a first example turbofan engine in the downstream terminal plane of the structure;
- Figure 6: shows a plot of the radius of the internal surface shown Figure 5 as a function of azimuthal position;
- Figure 7: shows the internal surface of the outer fixed structure of a second example turbofan engine in the downstream terminal plane of the structure, the second example not being an example of the invention but nevertheless being useful for understanding the invention;
- Figure 8: shows a plot of the radius of the internal surface shown in Figure 7 as a function of azimuthal position;
- Figure 9: shows the internal surface of the outer fixed structure of a third example turbofan engine in the downstream terminal plane of the structure, the third example engine not being an example of the engine but nevertheless being useful for understanding the invention;
- Figure 10: shows a plot of the radius of the internal surface shown in Figure 9 as a function of azimuthal position;
- Figure 11: shows another plot of the radius of the internal surface shown in Figure 5 as a function of azimuthal position;
- Figure 12: shows another plot of the radius of the internal surface shown in Figure 7 as a function of azimuthal position;
- Figure 13: shows another plot of the radius of the internal surface shown in Figure 9 as a function of azimuthal position;
- Figure 14: shows the internal surface of the outer fixed structure of a fourth example turbofan engine in the downstream terminal plane of the structure;
- Figure 15: shows a plot the radius of the internal surface shown Figure 14 as a function of azimuthal position;
- Figure 16: shows the internal surface of the outer fixed structure of a fifth example turbofan engine in the downstream terminal plane of the structure; and
- Figure 17: shows a plot the radius of the internal surface shown Figure 16 as a function of azimuthal position;

### DETAILED DESCRIPTION

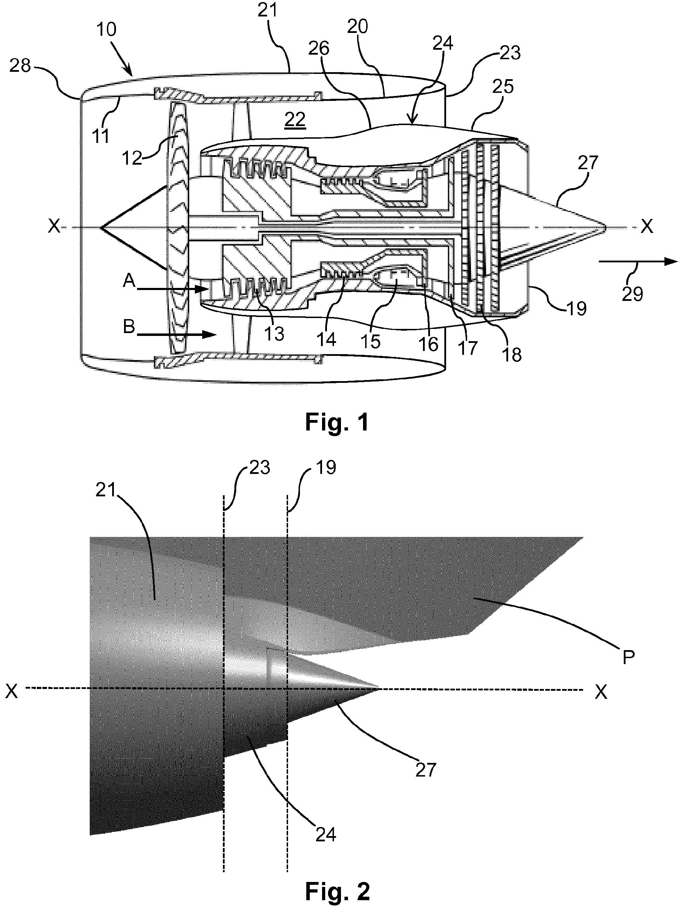

Referring to Figures 1 and 2, a known three-spool, separate-jets, turbofan engine 10 having a longitudinal (rotational) axis X comprises an engine core 24 having a core cowling 25 located radially inwardly of an outer fixed structure 21 with respect to the axis X. The outer fixed structure 21 terminates at its downstream end in a downstream terminal plane 23 which is substantially normal to the axis X. The portion of the core cowling 25 fore of the terminal plane 23, and the internal surface of the outer fixed structure 21 which longitudinally coincides with that portion respectively define inner 26 and outer 20 walls of a bypass duct 22 which terminates at a bypass duct exit plane coincident with the downstream terminal plane 23 of the outer fixed structure 21. The engine core 24 extends downstream of the bypass duct exit plane 23 so that the engine core 24 has an afterbody portion. The engine core 24 terminates at a core exit plane 19 which is also substantially normal to the axis X. The outer fixed structure 21 may not form complete annulus around the longitudinal axis X because it may be interrupted over a limited azimuthal range by a pylon (indicated by P in Figure 2) for attaching the engine to an aircraft, or by a space for accommodating such a pylon, depending on how the engine 10 is, or is to be, attached to an aircraft. The engine 10 has a propulsive fan 12, intermediate 13 and high 14 pressure compressors, combustion equipment 15, and high 16, intermediate 17 and low 18 pressure turbines. A centre-body 27 extends through the core exit plane 19. The outer fixed structure 21 has an intake 11 having an intake highlight 28.

During operation of the engine 10, air and combustion products pass through the engine 10 in a general direction indicated by 29. Air entering the outer fixed structure 21 at the front of the engine is accelerated by the fan 12. Aft (downstream) of the fan 12 this air becomes divided into two air flows: a first air flow A into the intermediate pressure compressor 13 and a second air flow B which passes through the bypass duct 22. The intermediate pressure compressor 13 compresses the air flow directed into it before delivering that air to the high pressure compressor 14 where further compression takes place. Air flow B is output from the bypass duct 22 at the bypass duct exit plane 23 and provides the majority of the engine's thrust.

Compressed air output from the high-pressure compressor 14 is directed into the combustion equipment 15 where it is mixed with fuel and the resulting mixture combusted. The resulting hot combustion products then expand through, and thereby drive the high, intermediate and low-pressure turbines 16, 17, 18 before being exhausted through the exit plane 19 of the engine core 29 to provide further thrust. The high, intermediate and low pressure turbines 16, 17, 18 drive respectively the high pressure compressor 14, intermediate pressure compressor 13 and fan 12, each by means of a respective interconnecting shaft which has a rotation axis coincident with the longitudinal axis X of the engine 10.

In the engine 10, the outer wall 20 of the bypass duct 22, the core cowling 25 and the centre-body 27 of the engine 10 are each axisymmetric, i.e. they each have circular cross-sections at all positions along the axis X at which they exist. For example, the bypass duct outer wall 20 is circular at the bypass duct exit plane 23 and at longitudinal positions fore (upstream) of the bypass duct exit plane 23. The core cowling 25 is circular at the core exit plane 19 and at longitudinal positions upstream of the core exit plane 19. As shown in Figure 2, a pylon P may interrupt the outer fixed structure 21 over a limited angular range in azimuth around the axis X. The pylon P extends through the bypass duct exit plane 23 so that the bypass duct outer wall 20 (equivalently the internal surface of the outer fixed structure 21) does not describe a closed path in the bypass duct exit 23 (equivalently the downstream terminal plane of the outer fixed structure 21).

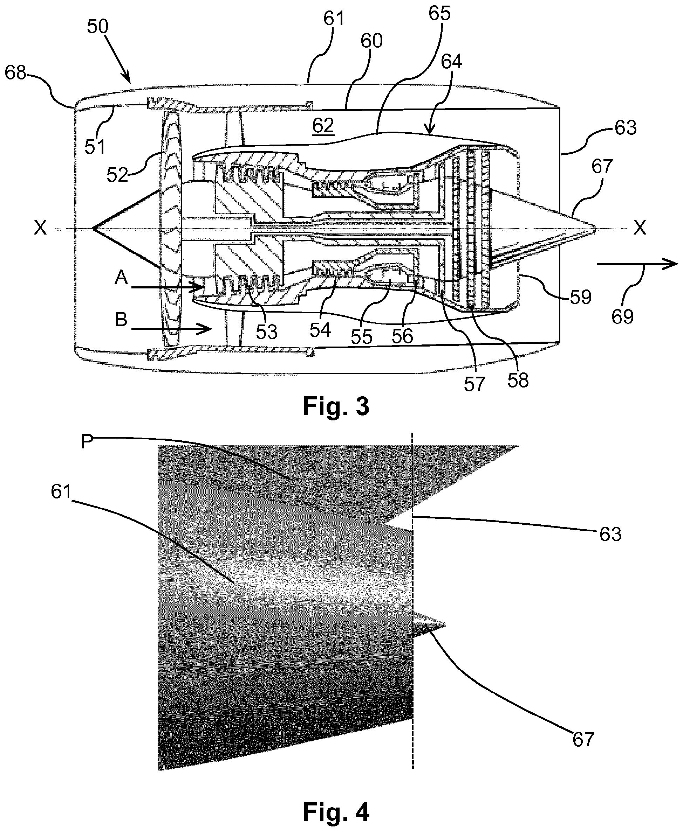

Figure 3 shows a longitudinal section through a known, mixed-jets turbofan engine indicated generally by 50. Figure 4 shows a side view of a rear portion of the engine 50 with a pylon P fitted. Parts of the engine 50 are labelled using reference numerals differing by 40 from those labelling corresponding parts in Figures 1 and 2. The engine 50 is similar to the engine 10 of Figures 1 to 3 except that it is a mixed-jets engine rather than a separate-jets engine. The outer fixed structure 61 of the engine 50 extends downstream of core exit plane 59 so that the engine core 64 does not have an afterbody. The outer fixed structure 61 terminates at its aft (downstream) end in a downstream terminal plane 63. Planes 59, 63 are each substantially normal to the longitudinal axis X of the engine 50. Bypass duct 62 terminates at the longitudinal position of core exit plane 59. During operation of the engine 50, bypass air exiting bypass duct 62 and exhaust from engine core 64 are mixed between planes 59 and 63 prior to being expelled through the downstream terminal plane 63 of the outer fixed structure 61. The outer fixed structure 61 has an intake 51 having an intake highlight 68.

In the engine 50, the outer wall 60 of the bypass duct 62, the core cowling 65 and centre-body 67 of the engine 10 are each axisymmetric, i.e. they each have circular cross-sections at all positions along the axis X at which they exist. For example, the bypass duct outer wall 60 is circular at the downstream terminal plane 63 of the outer fixed structure 61 and at longitudinal positions fore (upstream) of the plane 23. The core cowling 65 is circular at core exit plane 59 and at longitudinal positions upstream of the core exit plane 59. In Figure 4, a pylon P interrupts the outer fixed structure 61 over a limited angular range in azimuth around the axis X, however the pylon P does not extend through the downstream terminal plane 63 of the outer fixed structure 61. The internal surface of the outer fixed structure 61 therefore describes a closed path in the downstream terminal plane 63 thereof.

Other turbofan engines to which the present disclosure may be applied may have alternative configurations. For example, such engines may have an alternative number of interconnecting shafts (e.g. two) and/or an alternative number of compressors and/or turbines. Further, an engine may comprise a gearbox provided in the drive train from a turbine to a compressor and/or fan.

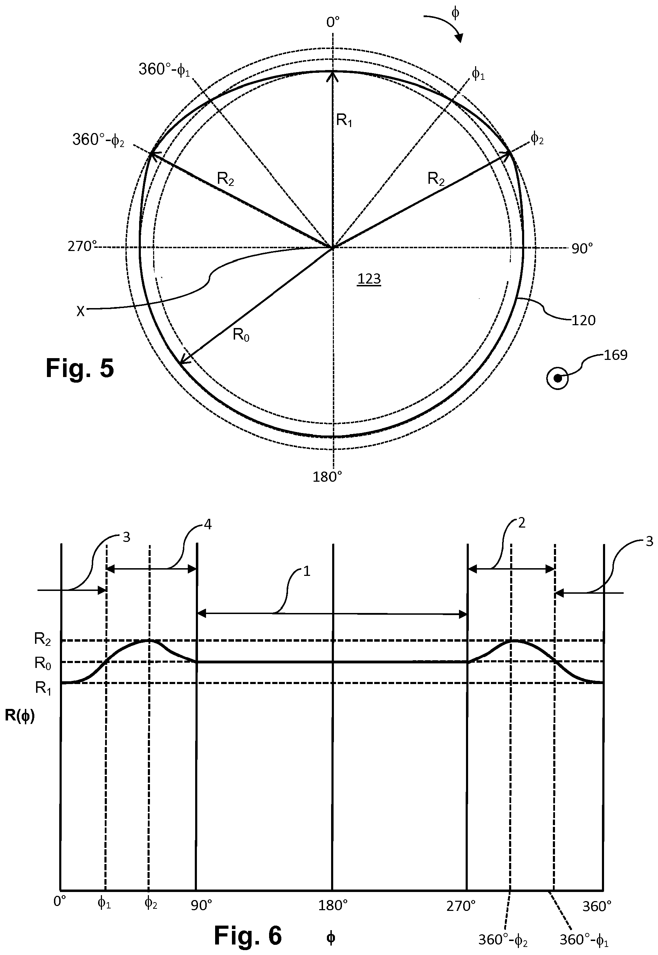

Figure 5 shows the internal surface 120 of the outer fixed structure of a first example turbofan engine, in the downstream terminal plane 123 of the outer fixed structure of the engine. The general direction of airflow through the engine is indicated at 169. The engine may be either a separate-jets engine or a mixed-jets engine; if it is a separate-jets engine then the plane 123 is also the bypass duct exit plane of the engine. Figure 6 shows a plot of the radius of the internal surface 120 versus azimuthal position φ measured with respect to the longitudinal axis X of the engine and indicates four contiguous azimuthal intervals 1, 2, 3, 4 forming a combined interval of 360°. The radius R of the internal surface 120 of the outer fixed structure is a function of azimuthal position φ, i.e. R = R(φ). The radius R has a minimum value R₁ and a maximum value R₂. In the first interval 1, 90° ≤ φ ≤ 270°, the radius R is constant and equal to R₀ where R₂ > R₀ > R₁, i.e. the internal surface 120 is circular in the interval 1, 90° ≤ φ ≤ 270°, with radius R₀. In the second interval 2, 270° < φ < 360° - φ₁ the radius R is greater than R₀ and passes through the maximum value R₂ at φ = 360° - φ₂. Over the third interval 3, defined by 360° - φ₁ < φ < 360° and 0° ≤ φ < φ₁ the radius R is less than R₀ and passes through the minimum value R₁ at φ = 0°. Over the fourth interval 4 φ₁ < φ < 90° the radius R is greater than R₀ and passes through the maximum value R₂ at φ = φ₂. Over intervals where the radius R increases or decreases, it does so monotonically with φ. P(φ₁) = P(360°-φ₁) = R₀.

The internal surface 120 thus describes a closed path in the downstream terminal plane 123 of the outer fixed structure of the first example engine and is circular with radius R₀ in the first interval 90° ≤ φ ≤ 270° but "flattened" in the third interval defined by 0° ≤ φ < φ₁ and 360° - φ₁ < φ < 360° such that that R < R₀. On the other hand the radius R of the internal surface 120 is greater than R₀ over the second and fourth intervals 2, 4.

Figures 5 and 6 indicate the radius R of the internal surface 120 as a function of azimuthal position φ with respect to the axis X in the downstream terminal plane 123 of the outer fixed structure of the first example engine. Moving upstream of the terminal plane 123, the internal surface 120 of the outer fixed structure becomes increasingly axisymmetric (circular) until at a certain longitudinal position upstream of the terminal plane 123 the internal surface is substantially axisymmetric (circular).

In variants of the first example engine, the relative values of the radii R₀, R₁ and R₂ and of the angles φ₁, φ₂ may differ from those indicated in Figure 5 and 6. In some variants, in the interval 270° < φ < 360°, the azimuthal positions at which the radius R has the values R₂ and R₀ may be 360° - φ₃ and 360° - φ₄ respectively where 90° > φ₃ > φ₄ and φ₃ ≠ φ₂, φ₄ ≠ φ₁ so that the internal surface 120 is not symmetric about a plane containing the axis X and defined by the φ = 0°, 180° positions. In some variants, some or all of the values R₀, R₁,R₂, φ₁, φ₂ (and also φ₃, φ₄ as appropriate) may be selected so that the area enclosed by the internal surface 120 is approximately or substantially πR₀².

If the first example engine is a separate-jets engine, the internal surface 120 may have a discontinuity over a limited angular range for accommodating a pylon. The discontinuity could have any azimuthal position for example it could include the positions φ = 0° or φ = 180° and may be either symmetrical or asymmetrical with respect to those positions. The azimuthal orientation of the engine when installed on air aircraft may vary. For example, φ = 0° may correspond to the vertically upward direction and φ = 180° to the vertically downward direction or vice-versa.

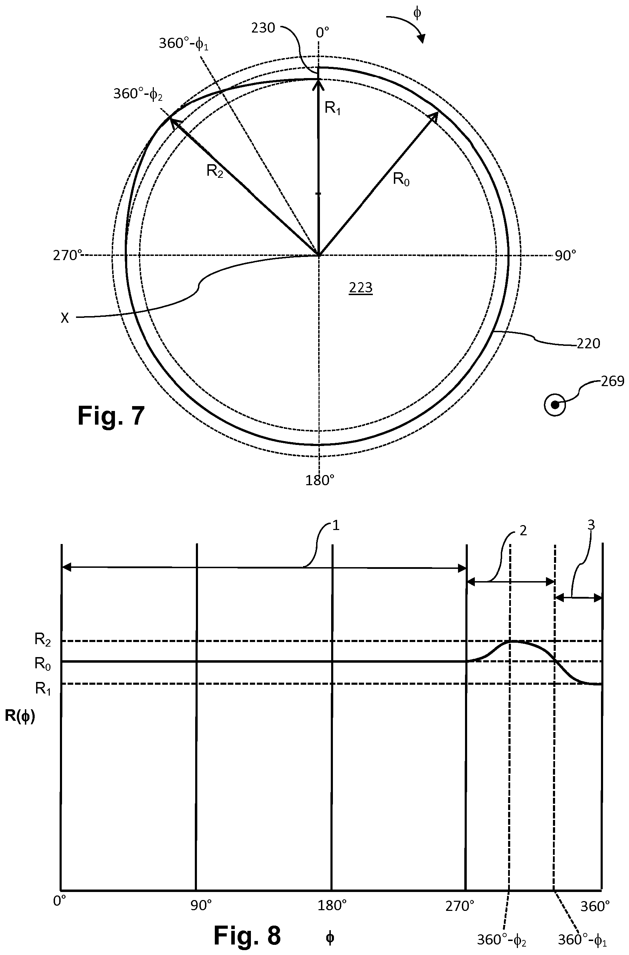

Figure 7 shows the internal surface 220 of the outer fixed structure of a second example turbofan engine, in the downstream terminal plane 223 of the outer fixed structure of the engine. The second example turbofan engine is not an example of the invention but is nevertheless useful for understanding the invention. The general direction of airflow through the engine is indicated at 269. The engine may be either a separate-jets engine or a mixed-jets engine; if it is a separate-jets engine then the plane 223 is also the bypass duct exit plane of the engine. Figure 8 shows a plot of the radius of the internal surface 220 versus azimuthal position measured with respect to the longitudinal axis X of the engine and indicates three contiguous azimuthal intervals 1, 2, 3 forming a combined interval of 360°.

The radius R of the internal surface 220 of the outer fixed structure is a function of azimuthal position φ with respect to the axis X, i.e. R = R(φ). The radius R has a minimum value R₁ and a maximum value R₂. In the first interval 1, 0° ≤ φ ≤ 270°, the radius R is constant and equal to R₀, where R₂ > R₀ > R₁,i.e. the internal surface 220 is circular in the in the interval 0° ≤ φ ≤ 270°. In the second interval 2, 270° < φ < 360° - φ₁ the radius R is greater than R₀ and passes through the maximum value R₂ at φ = 360° - φ₂. Over the third interval 3, 360° - φ₂ < φ ≤ 360° the radius decreases from R₀ to the minimum value R_{1.} Over intervals where the radius R increases or decreases, it does so monotonically with φ. P(360°-φ₁) = R₀.

At φ = 0° or 360°, the internal surface 220 has a portion 230 which extends directly radially outward from R = R₁ to R = R₀. The internal surface 220 describes a closed path in the downstream terminal plane 223 of the outer fixed structure of the second example engine and is circular with radius R₀ in the first interval 1 and "flattened" (i.e. R < R₀) over the third interval 3. On the other hand the radius R of the internal surface 220 is greater than R₀ in the second interval 2 and reaches the maximum value R₂ at φ = 360° - φ₂.

Figures 7 and 8 indicate the radius R of the internal surface 220 as a function of azimuthal position φ with respect to the axis X in the downstream terminal plane 223 of the outer fixed structure of the second example engine. Moving upstream of the terminal plane 223, the internal surface 220 of the outer fixed structure becomes increasingly axisymmetric (circular) until at a certain longitudinal position upstream of the terminal plane 223 the internal surface is substantially axisymmetric (circular).

In variants of the second example engine, the relative values of R₀, R₁,R₂ and the values φ₁, φ₂ may differ from those represented in Figures 7 and 8. In some variants some or all of these parameters may be selected such that the area enclosed by the internal surface 220 is approximately or substantially equal to πR₀². In some variants of the second example engine the function R(φ) may be such that form of the internal surface is laterally inverted about the φ = 0°, 180° position compared to the surface 220 of Figure 7 so that the R = R₀ over an interval 90° ≤ φ ≤ 360°, R monotonically increases from R₁ to R₂ over an interval 0 < φ < φ₂, and R monotonically decreases from R₂ to R₀ over an interval φ₂ < φ < 90° where R(φ₁) = R₀, R(φ₂) = R₂ and 90° > φ₂ > φ₁.

If the second example engine is a separate-jets engine, the internal surface 220 may have a discontinuity over a limited angular range for accommodating a pylon. The discontinuity could have any azimuthal position for example it could include the positions φ = 0° or φ = 180° and may be either symmetrical or asymmetrical with respect to those positions. The azimuthal orientation of the engine when installed on air aircraft may vary. For example, φ = 0° may correspond to the vertically upward direction and φ = 180° to the vertically downward direction or vice-versa.

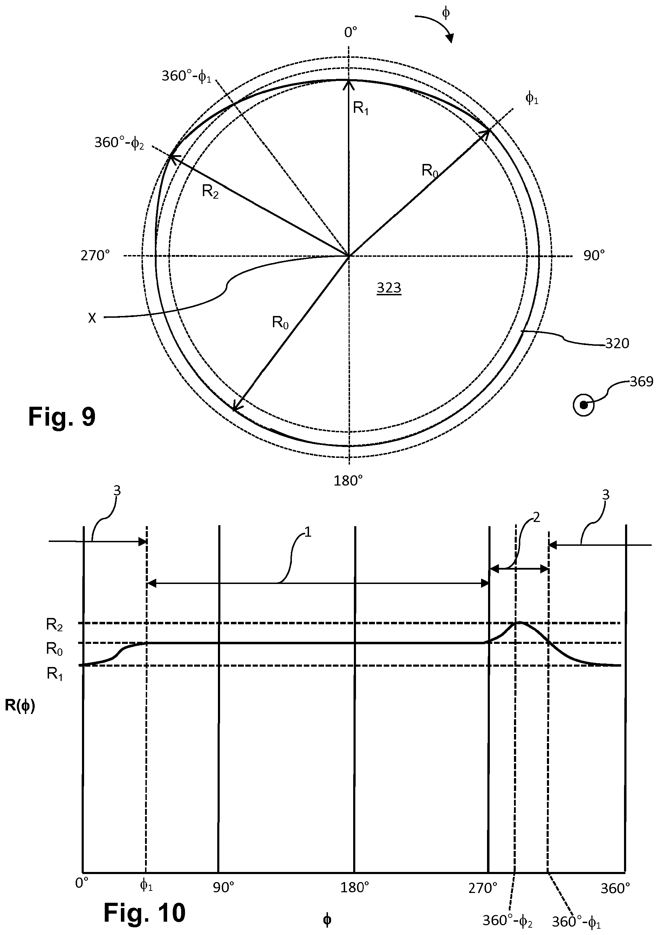

Figure 9 shows the internal surface 320 of the outer fixed structure of a third example turbofan engine, in the downstream terminal plane 323 of the outer fixed structure of the engine. The third example turbofan engine is not an example of the invention but is nevertheless useful for understanding the invention. The general direction of airflow through the engine is indicated at 369. The engine may be either a separate-jets engine or a mixed-jets engine; if it is a separate-jets engine then the plane 323 is also the bypass duct exit plane of the engine. Figure 10 shows a plot of the radius of the internal surface 320 versus azimuthal position φ measured with respect to the longitudinal axis X of the engine and indicates three contiguous azimuthal intervals 1, 2, 3 forming a total or combined interval of 360°. The radius R of the internal surface 320 of the outer fixed structure is a function of azimuthal position φ with respect to the axis X, i.e. R = R(φ). The radius R has a minimum value R₁ and a maximum value R₂. The radius R has a constant value R₀ the first azimuthal interval 1 φ₁ ≤ φ ≤ 270°, where R₂ > R₀ > R_{1.} In the second azimuthal interval 2, 270° < φ ≤ 360° - φ₁, the radius R is greater than R₀ and reaches the maximum value R₂ at φ = 360 - φ₂. Over the third azimuthal interval 3, defined by 360° - φ₁ < φ < 360° and 0° ≤ φ < φ₁ the radius R is less than R₀ and passes through the minimum value R₁ at φ = 0°. Over intervals where the radius increases or decreases, it does so monotonically. P(360°-φ₁) = R₀.

The internal surface 320 thus describes a closed path in the downstream terminal plane 323 of the outer fixed structure of the third example engine and is circular with radius R₀ in the first interval 1 but "flattened"(i.e. R < R₀) in the third interval 3. On the other hand the radius R of the internal surface 320 is greater than R₀ in the second interval 3

Figures 9 and 10 indicate the radius R of the internal surface 320 as a function of azimuthal position φ with respect to the axis X in the downstream terminal plane 323 of the outer fixed structure of the third example engine. Moving upstream of the terminal plane 323, the internal surface 320 of the outer fixed structure becomes increasingly axisymmetric (circular) until at a certain longitudinal position upstream of the terminal plane 123 the internal surface is substantially axisymmetric (circular).

In variants of the third example engine, the relative values of R₀, R₁, R₂ and the values φ ₁, φ₂ may differ from those represented in Figures 9 and 10. In some variants some or all of these parameters may be selected such that the area enclosed by the internal surface 320 is approximately or substantially equal to πR₀². In some variants of the third example engine the function R(φ) may be such that the form of the internal surface is laterally inverted about the φ = 0°, 180° position compared to the surface 320 of Figure 9. In this case R = R₀ over a first interval 90° ≤ φ ≤ 360° - φ₁, R < R₀ over an interval defined by 360° - φ₁ < φ ≤ 360° and 0° < φ < φ₁ and R > R₀ over a third interval φ₁ < φ < 90° and where R (φ₁) =R₀, R(φ₂) = R₂.

In variants of the third example engine, the relative values of the radii R₀, R₁ and R₂ and of the angles φ₁, φ₂ may differ from those indicated in Figure 9 and 10. In some variants, some or all of the values R₀, R₁,R₂, φ₁, φ₂ may be selected so that the area enclosed by the internal surface 320 is approximately or substantially πR₀².

If the second example engine is a separate-jets engine, the internal surface 320 may have a discontinuity over a limited angular range for accommodating a pylon. The discontinuity could have any azimuthal position for example it could include either of positions φ = 0° or φ = 180° and may be either symmetrical or asymmetrical with respect to either position. The azimuthal orientation of the engine when installed on air aircraft may vary. For example, φ = 0° may correspond to the vertically upward direction and φ = 180° to the vertically downward direction or vice-versa.

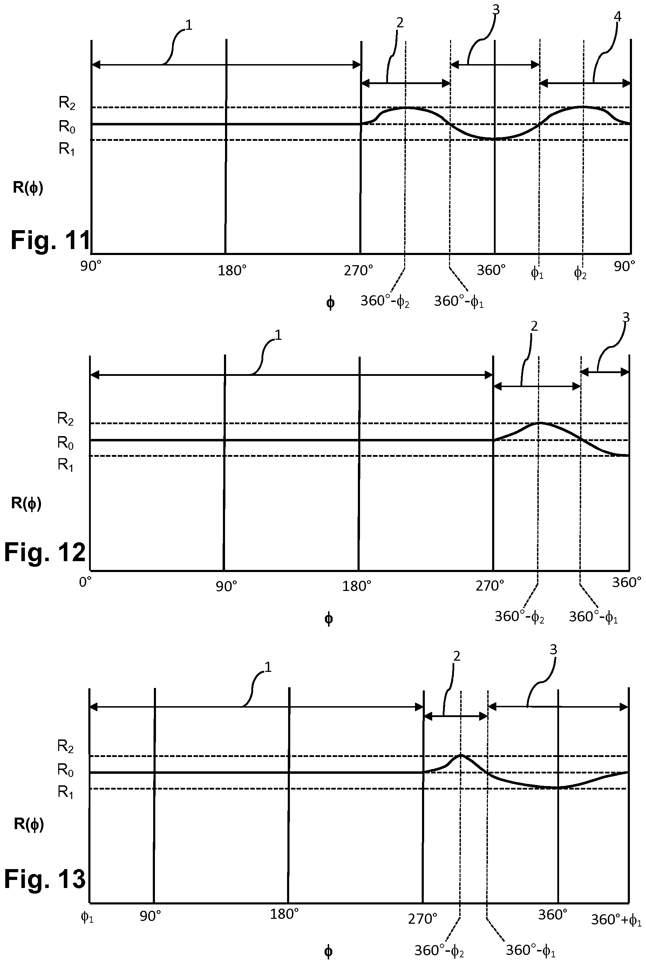

Figures 11, 12 and 13 are plots of radius R against φ equivalent to the Figures 6, 8 and 10 respectively but with the first azimuthal interval (over which R = R₀) represented on the left-hand side of the plot in each case.

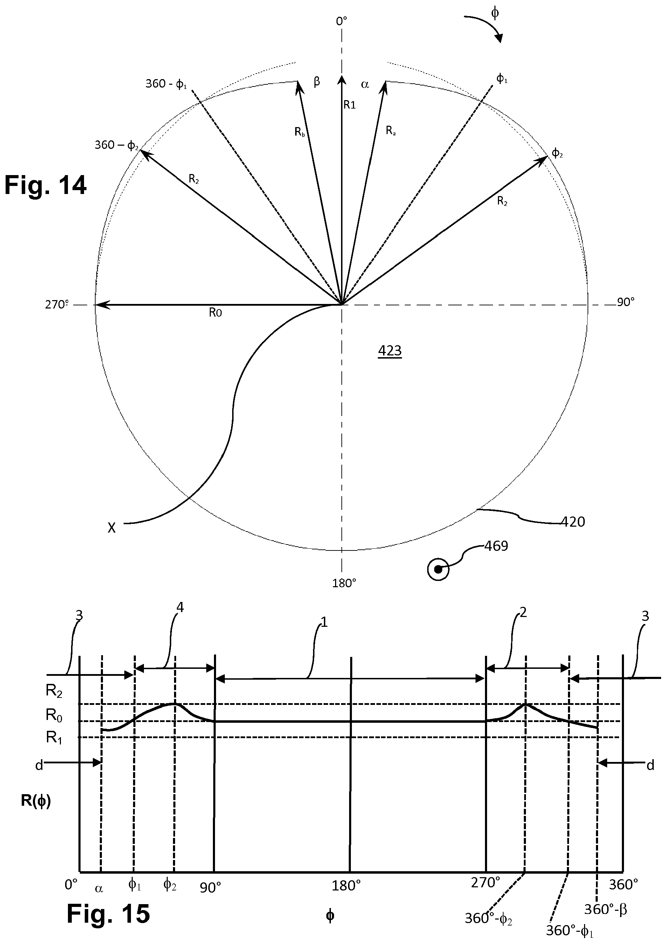

Figure 14 shows the internal surface 420 of the outer fixed structure of a fourth example turbofan engine, in the downstream terminal plane 423 of the outer fixed structure, the general direction of airflow through the engine being indicated at 469. Figure 15 shows a plot of the radius of the internal surface 420 of the outer fixed structure in the downstream terminal plane 423 of the structure as a function of azimuthal position φ. The engine is a separate-jets turbofan engine so that the downstream terminal plane 423 of the outer fixed structure of the engine is also the bypass duct exit plane of the engine. The outer fixed structure has a discontinuity which extends through the bypass duct exit plane 423 such that the internal surface 420 has a discontinuity of total angular extent α + β in the bypass duct exit plane 423 which includes the position φ = 0°. However the angular extent of the discontinuity is asymmetric about φ = 0°, i.e. α ≠ β, Rₐ ≈ R_{b}, and Rₐ, R_{b} > R₁ (R₁ is the radius of the complete geometric path corresponding to the internal surface 420). Apart from the discontinuity, the internal surface 423 is similar to the internal surface 123 of Figure 5. Figure 15 indicates four azimuthal intervals, 1, 2, 3, 4 which are contiguous in azimuth φ and correspond to a total interval of 360°. In the first interval 1 90° ≤ φ ≤ 270° the radius of the internal surface 420 is constant and equal to R₀. In the second interval 2 the radius R passes through a maximum value R₂ at 360° - φ₂ and returns to the value R₀ at φ = 360° - φ₁. In the third interval 3 the radius of the internal surface 420 reduces to a value R_{b} at φ = 360° - β which is slightly greater than a minimum value R(0°) = R₁ of the complete geometric path corresponding to the internal surface 420 and there is a first portion of the discontinuity in the range 360° - β < φ ≤ 360° and a second portion of the discontinuity in the range 0° < φ < α (α ≠ β). The radius increases from Rₐ ≈ R₁ to R₀ at φ = φ₁. In the fourth interval 4 the radius passes through the maximum value R₂ at φ = φ₂ and then reduces to R₀ at φ = 90°. Over intervals where the radius increases or decreases, it does so monotonically with φ.

Upstream of the plane 423, the internal surface 420 becomes increasingly circular. At a certain position upstream of the plane 423 the internal surface is substantially circular (i.e. axisymmetric).

In variants of the fourth example engine, the discontinuity in the internal surface of the outer fixed structure in the bypass duct exit is symmetric about the position φ = 0°, i.e. α = β.

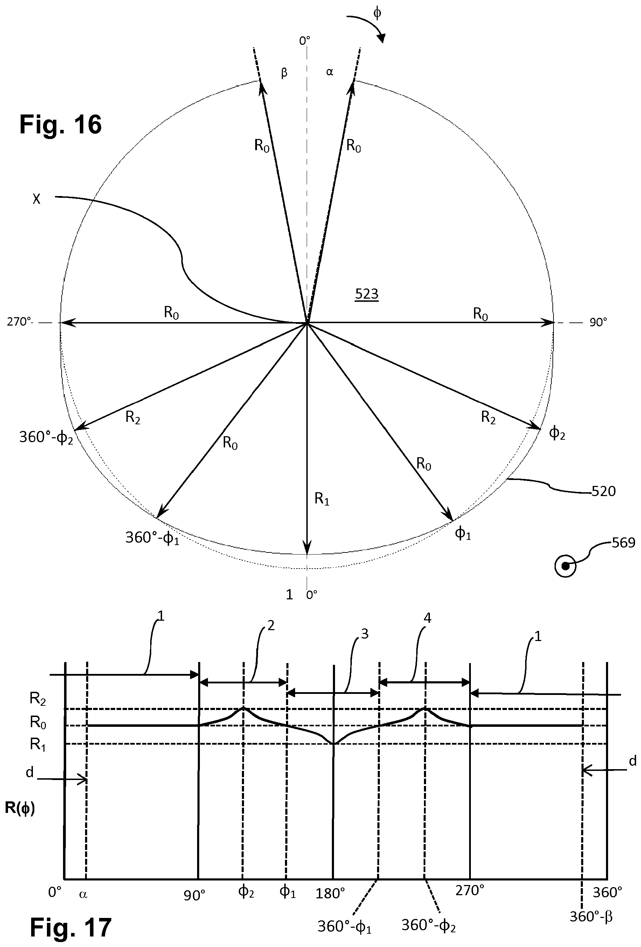

Figure 16 shows the internal surface 520 of the outer fixed structure of a fifth example turbofan engine, in the downstream terminal plane 523 of the outer fixed structure, the general direction of airflow through the engine being indicated at 569. Figure 17 shows a plot of the radius of the internal surface 520 of the outer fixed structure in the downstream terminal plane 523 of the structure as a function of azimuthal position φ. The engine is a separate-jets turbofan engine so that the downstream terminal plane 523 of the outer fixed structure of the engine is also the bypass duct exit plane of the engine. The outer fixed structure has a discontinuity which extends through the bypass duct exit plane 523 such that the internal surface 520 in the bypass duct exit plane 423 has a discontinuity of total angular extent α + β which includes the position φ = 0°. The angular extent of the discontinuity is asymmetric about φ = 0°, i.e. α ≠ β.

Figure 17 indicates four azimuthal intervals, 1, 2, 3, 4 which are contiguous in azimuth φ and correspond to a total interval of 360°. The internal surface 520 is circular (R = R₀) over a first azimuthal interval 1 defined by α ≤ φ ≤ 90° and 270° ≤ φ ≤360° - β. In the azimuthal intervals 90° < φ < φ₁ and 360° - φ₁ < φ < 270° the radius R > R₀ and passes through a maximum value R₂ at φ = φ₂ and φ = 360° - φ₂ respectively. In the interval φ₁ < φ < 360° - φ₁ the radius R is less than R₀ and passes through a minimum value R₁at φ = 180°. On either side of the discontinuity, the radius of the internal surface 520 is R₀, i.e. R(α) = R(360° - β) = R₀. Over intervals where the radius increases or decreases, it does so monotonically with φ.

Upstream of the plane 423, the internal surface 420 becomes increasingly circular. At a certain position upstream of the plane 423 the internal surface is substantially circular (i.e. axisymmetric).

In variants of the fifth example engine, the discontinuity in the internal surface of the outer fixed surface in the bypass duct exit is symmetric about the position φ = 0° , i.e. α = β.

Referring again to the first, second and third example engines and to Figures 5 to 13, the internal surfaces 120, 220, 320 of the outer fixed structures of these engines in their respective downstream terminal end planes 123, 223, 323 are "flattened" (i.e. R < R₀) over their respective third azimuthal intervals. If the vertically upward direction of such an engine when installed on an aircraft lies within the third azimuthal interval (for example φ = 0° in the case of the first and fourth example engines) then the engine may be mounted closer to the wing of an aircraft than is the case for a conventional engine having an outer fixed structure which is substantially axisymmetric or circular in its downstream terminal plane. Consequently, such an engine may have a fan of increased diameter compared to that of a conventional engine, providing lower specific thrust and greater specific fuel consumption than is the case for a turbofan engine with a smaller fan. Additionally, in the case of a separate-jets engine in which a pylon interrupts the internal surface of the outer fixed structure the engine's bypass duct exit plane, the wetted area of the pylon in that plane is reduced compared to the case of a conventional engine, lowering drag on the bypass exhaust flow and improving engine performance.

If the third azimuthal interval of any of the engines of Figures 5, 7, and 9 includes the vertically downward direction when the engine is installed on an aircraft then the downstream terminal plane of the outer fixed structure is flattened around the bottom of the structure. In operation of such an engine, the speed of air in the region of the 'hump' of the core cowling around the bottom of the engine is reduced compared to the case of an engine having an outer fixed structure which is axisymmetric in its downstream terminal plane, reducing nozzle loss and improving nozzle performance compared to an axisymmetric engine. Additionally, the total length of the outer fixed structure of such an engine may be shorter than that of an equivalent engine which is axisymmetric in its downstream terminal end plane, thus reducing weight and specific fuel consumption and allowing the engine to be mounted closer to a wing in the axial direction.

In other examples engines, the outer fixed structure may terminate at an axial position which depends on azimuthal position with respect to the longitudinal (rotation) axis of the engine. An example of an engine having such an outer fixed structure is the Rolls-Royce^{®} Trent^{®} 1000 which has chevrons. In such an example, for the purposes of the present disclosure, the downstream terminal plane of the outer fixed structure is that plane, normal to the axis of the engine, furthest downstream at which the internal surface of the outer fixed structure is unbroken in azimuth apart from one or more discontinuities such as that shown in Figures 14 and 16 suitable for accommodating an element such as a pylon.

In the downstream terminal plane of an outer fixed structure of an engine, the internal and external radii at a given azimuthal position may be equal or substantially equal, or they may differ by a fixed amount which is independent of φ.

Various modifications and improvements can be made to the examples described above without departing from the concepts described herein. The invention is defined by the appended set of claims.

## Claims

1. A turbofan engine comprising an engine core positioned radially inwardly of an outer fixed structure with respect to the longitudinal axis of the engine, the aft or downstream end of the outer fixed structure having a terminal plane (123; 223; 323; 423; 523) which is substantially normal to the longitudinal axis (X) of the engine, the radius R of the internal surface (120; 220; 320; 420; 520) of the outer fixed structure in the terminal plane being a function R(φ) of azimuthal position φ in the terminal plane with respect to the longitudinal axis of the engine such that
(i) the radius has a constant value R₀ within a first azimuthal interval (1) of at least 180°;
(ii) the radius has a value greater than R₀ at any azimuthal position within a second azimuthal interval (2); and
(iii) the radius has a value less than R₀ at any azimuthal position within a third azimuthal interval (3);
(iv) the radius has a value greater than R₀ at any azimuthal position within a fourth azimuthal interval (4);
wherein the second azimuthal interval is contiguous with the first and third azimuthal intervals, the fourth azimuthal interval is contiguous with the first and third azimuthal intervals, the first, second, third and fourth azimuthal intervals form a total azimuthal interval of 360°, and **characterised in that** R(φ) is single-valued at all azimuthal positions φ at which the internal surface of the outer fixed structure exists in the terminal plane.

2. A turbofan engine according to claim 1 wherein the radius passes through a maximum value R₂ at a single azimuthal position within each of the second and fourth azimuthal intervals and passes through a minimum value R₁at a single azimuthal position within the third azimuthal interval, wherein R₂ > R₀ > R₁ and wherein the radius is a monotonic function of azimuthal position φ between any pair of azimuthal positions corresponding to (a) a maximum and a minimum value of the radius and (b) a maximum value of the radius and an adjacent boundary which is either the boundary of the first and second azimuthal intervals or the boundary of the first and fourth azimuthal intervals.

3. A turbofan engine according to claim 2 wherein the radius of the internal surface (120) has the maximum value R₂ at the midpoints of the second and fourth azimuthal intervals.

4. A turbofan engine according to claim 2 or claim 3 wherein the minimum value R₁ of the radius of the internal surface (120) occurs at the midpoint of the third azimuthal interval.

5. A turbofan engine according to claim 4 wherein the internal surface has a discontinuity over an azimuthal interval which includes the azimuthal position corresponding to the minimum value R₁.

6. A turbofan engine according to claim 5 wherein the centre of the discontinuity coincides in azimuth with the azimuthal position corresponding to the minimum value R_{1.}

7. A turbofan engine according to claim 1 wherein the internal surface (520) has a discontinuity over an azimuthal interval including the centre of the first azimuthal interval.

8. A turbofan engine according to claim 7 wherein the centre of the discontinuity coincides in azimuth with the centre of the first azimuthal interval.

## Patentansprüche

1. Mantelstromtriebwerk, umfassend einen Triebwerkskern, der in Bezug auf die Längsachse des Triebwerks radial innerhalb einer äußeren festen Struktur positioniert ist, wobei das hintere oder stromabwärtige Ende der äußeren festen Struktur eine Anschlussebene (123; 223; 323; 423; 523) aufweist, die im Wesentlichen senkrecht zur Längsachse (X) des Triebwerks ist, wobei der Radius R der Innenoberfläche (120; 220; 320; 420; 520) der äußeren festen Struktur in der Anschlussebene eine Funktion R(Φ) einer Azimutposition Φ in der Anschlussebene in Bezug auf die Längsachse des Triebwerks ist, sodass
(i) der Radius innerhalb eines ersten Azimutintervalls (1) von mindestens 180° einen konstanten Wert R₀ aufweist;
(ii) der Radius an einer beliebigen Azimutposition innerhalb eines zweiten Azimutintervalls (2) einen Wert aufweist, der größer als R₀ ist; und
(iii) der Radius an einer beliebigen Azimutposition innerhalb eines dritten Azimutintervalls (3) einen Wert aufweist, der kleiner als R₀ ist;
(iv) der Radius an einer beliebigen Azimutposition innerhalb eines vierten Azimutintervalls (4) einen Wert aufweist, der größer als R₀ ist;
wobei das zweite Azimutintervall an das erste und das dritte Azimutintervall angrenzt, das vierte Azimutintervall an das erste und das dritte Azimutintervall angrenzt, das erste, das zweite, das dritte und das vierte Azimutintervall ein Gesamtazimutintervall von 360° bilden, und **dadurch gekennzeichnet, dass** R(Φ) an allen Azimutpositionen Φ einwertig ist, an denen die Innenoberfläche der äußeren festen Struktur in der Anschlussebene existiert.

2. Mantelstromtriebwerk nach Anspruch 1, wobei der Radius einen Maximalwert R₂ an einer einzelnen Azimutposition innerhalb von jedem des zweiten und des vierten Azimutintervalls durchläuft und einen Minimalwert R₁ an einer einzelnen Azimutposition innerhalb des dritten Azimutintervalls durchläuft, wobei R₂ > R₀ > R₁ und wobei der Radius eine monotone Funktion der Azimutposition Φ zwischen einem beliebigen Paar von Azimutpositionen ist, die (a) einem Maximal- und einem Minimalwert des Radius und (b) einem Maximalwert des Radius und einer benachbarten Grenze entsprechen, die entweder die Grenze des ersten und des zweiten Azimutintervalls oder die Grenze des ersten und des vierten Azimutintervalls ist.

3. Mantelstromtriebwerk nach Anspruch 2, wobei der Radius der Innenoberfläche (120) den Maximalwert R₂ an den Mittelpunkten des zweiten und des vierten Azimutintervalls aufweist.

4. Mantelstromtriebwerk nach Anspruch 2 oder Anspruch 3, wobei der Minimalwert R₁ des Radius der Innenoberfläche (120) am Mittelpunkt des dritten Azimutintervalls auftritt.

5. Mantelstromtriebwerk nach Anspruch 4, wobei die Innenoberfläche eine Diskontinuität über ein Azimutintervall aufweist, welches die dem Minimalwert R₁entsprechende Azimutposition einschließt.

6. Mantelstromtriebwerk nach Anspruch 5, wobei das Zentrum der Diskontinuität in Azimut mit der Azimutposition zusammenfällt, die dem Minimalwert R₁ entspricht.

7. Mantelstromtriebwerk nach Anspruch 1, wobei die Innenoberfläche (520) eine Diskontinuität über ein Azimutintervall einschließlich des Zentrums des ersten Azimutintervalls aufweist.

8. Mantelstromtriebwerk nach Anspruch 7, wobei das Zentrum der Diskontinuität in Azimut mit dem Zentrum des ersten Azimutintervalls zusammenfällt.

## Revendications

1. Moteur à turboréacteur à double flux comprenant un noyau de moteur positionné radialement vers l'intérieur d'une structure fixe externe par rapport à l'axe longitudinal du moteur, l'extrémité arrière ou en aval de la structure fixe externe possédant un plan terminal (123 ; 223 ; 323 ; 423 ; 523) qui est sensiblement normale à l'axe longitudinal (X) du moteur, le rayon R de la surface interne (120 ; 220 ; 320 ; 420 ; 520) de la structure fixe externe dans le plan terminal étant une fonction R(Φ) de la position azimutale Φ dans le plan terminal par rapport à l'axe longitudinal du moteur de sorte que
(i) le rayon possède une valeur constante R₀ dans un premier intervalle azimutal (1) supérieure ou égale à 180° ;
(ii) le rayon possède une valeur supérieure à R₀ au niveau de n'importe quelle position azimutale dans un deuxième intervalle azimutal (2) ; et
(iii) le rayon possède une valeur inférieure à R₀ au niveau de n'importe quelle position azimutale dans un troisième intervalle azimutal (3) ;
(iv) le rayon possède une valeur supérieure à R₀ au niveau de n'importe quelle position azimutale dans un quatrième intervalle azimutal (4) ;
ledit deuxième intervalle azimutal étant contigu aux premier et troisième intervalles azimutaux, ledit quatrième intervalle azimutal étant contigu aux premier et troisième intervalles azimutaux, lesdits premier, deuxième, troisième et quatrième intervalles azimutaux formant un intervalle azimutal total de 360°, et **caractérisé en ce que** R(Φ) est de valeur unique à toutes les positions azimutales Φ au niveau desquelles la surface interne de la structure fixe externe existe dans le plan terminal.

2. Moteur à turboréacteur à double flux selon la revendication 1, ledit rayon passant par une valeur maximale R₂ au niveau d'une seule position azimutale dans chacun des deuxième et quatrième intervalles azimutaux et passant par une valeur minimale R₁ au niveau d'une seule position azimutale dans le troisième intervalle azimutal, R₂ > R₀ > R₁ et ledit rayon étant une fonction monotone de la position azimutale Φ entre toute paire de positions azimutales correspondant à (a) une valeur maximale et une valeur minimale du rayon et (b) une valeur maximale du rayon et une limite adjacente qui est soit la limite des premier et deuxième intervalles azimutaux, soit la limite des premier et quatrième intervalles azimutaux.

3. Moteur à turboréacteur à double flux selon la revendication 2, ledit rayon de la surface interne (120) possédant la valeur maximale R₂ aux points médians des deuxième et quatrième intervalles azimutaux.

4. Moteur à turboréacteur à double flux selon la revendication 2 ou la revendication 3, ladite valeur minimale R₁ du rayon de la surface interne (120) apparaissant au milieu du troisième intervalle azimutal.

5. Moteur à turboréacteur à double flux selon la revendication 4, ladite surface interne présentant une discontinuité sur un intervalle azimutal qui comprend la position azimutale correspondant à la valeur minimale R₁.

6. Moteur à turboréacteur à double flux selon la revendication 5, ledit centre de la discontinuité coïncidant en azimut avec la position azimutale correspondant à la valeur minimale R₁.

7. Moteur à turboréacteur à double flux selon la revendication 1, ladite surface interne (520) présentant une discontinuité sur un intervalle azimutal comprenant le centre du premier intervalle azimutal.

8. Moteur à turboréacteur à double flux selon la revendication 7, ledit centre de la discontinuité coïncidant en azimut avec le centre du premier intervalle azimutal.
